# EUROPÄISCHE PATENTSCHRIFT

(11) **EP 2 963 580 B1**
(45) Veröffentlichungstag und Bekanntmachung des Hinweises auf die Patenterteilung: **02.11.2016**
(21) Anmeldenummer: 15177288.6
(22) Anmeldetag: 01.09.2014
(51) Int. Cl.: G06K 7/10, H01Q 1/22, H01Q 21/24

(54) **RFID-LESEGERÄT**
RFID READER
APPAREIL DE LECTURE RFID

(30) Priorität: 16.09.2013 DE 202013104222 U
(43) Veröffentlichungstag der Anmeldung: 06.01.2016
(62) Teilanmeldung aus: 14183071.1
(73) Patentinhaber: ASTRA Gesellschaft für Asset Management mbH & Co. KG, 30890 Barsinghausen (DE)
(72) Erfinder: Werner, Andreas, 30167 Hannover (DE); Stobbe, Anatoli, 30890 Barsinghausen (DE)
(74) Vertreter: Patentanwälte Thömen & Körner

(56) Entgegenhaltungen:
- EP-A1- 2 234 206
- DE-A1-102006 053 987
- KRIEBEL K: "SAT-ANLAGEN INTELLIGENT STEUERN: DISEQC", RFE RADIO FERNSEHEN ELEKTRONIK, HUSS MEDIEN GMBH, BERLIN, DE, Bd. 45, Nr. 1, 1. Januar 1996 (1996-01-01) , Seiten 45-47, XP000583401, ISSN: 1436-1574

## Beschreibung

Die Erfindung betrifft ein RFID-Lesegerät nach dem Oberbegriff des Anspruchs 1.

Passive RFID-Systeme im UHF- und SHF-Bereich, nämlich bei Frequenzen über 500 MHz, ermöglichen eine Kommunikation zwischen dem Lesegerät und dem RFID-Datenträger über eine Entfernung von mehreren Metern. Innerhalb der maximalen Lesereichweite kann es aber durch Reflexionen der elektromagnetischen Wellen und daraus entstehenden Überlagerungen zu Feldstärkeanhebungen und Feldstärkeabsenkungen in bestimmten Bereichen des Lesefeldes kommen. RFID-Datenträger, die sich im Bereich einer Feldstärkeabsenkung befinden, können eventuell nicht oder nicht zuverlässig gelesen werden. Auch bei ungünstiger Ausrichtung der Antennen von Lesegerät und RFID-Datenträger zueinander, z. B. wenn deren Polarisationsebenen nicht übereinstimmen, können Probleme beim Lesen auftreten. Um eine weitgehend gleichmäßige Ausleuchtung des Lesefeldes innerhalb eines Zeitabschnittes zu erreichen, können verschiedene Parameter der Abstrahlung innerhalb dieses Zeitabschnittes nacheinander verändert werden. Aus der gattungsbildenden EP 2 368 210 A1 ist ein RFID-Antennensystem bekannt, bei dem mittels eines anschließbaren Readers eine Antenne über ein Antennennetzwerk betrieben wird. Das Antennennetzwerk umfasst zwei readerseitige Ports über das ein vom Reader kommendes Nutzsignal zur wechselweisen Erzeugung einer linksdrehenden und rechtsdrehenden Polarisation eingespeist wird. Der jeweils inaktive Port wird reflexionsarm oder -frei abgeschlossen.

Aus der US 2011/0 068 925 A1 ist ein Überwachungssystem für RFID-Etiketten bekannt, bei der eine zu überwachende Fläche in kleinere Bereiche aufgeteilt ist und jedem Bereich eine Antenne zugeordnet ist. Die Antennen werden wechselweise mit einem Lesegerät gekoppelt. Dies geschieht über gesteuerte Schalter. An jedem Schalter sind wiederum mehrere Antennen angeschlossen.

Aus der EP 1 734 662 A1 ist ein Erfassungsgerät für RFID-Etiketten bekannt, das mehrere benachbarte Lesegeräte umfasst, deren Lesebereiche sich überschneiden. Um Störungen zwischen benachbarten Lesegeräten zu vermeiden ist die Polarisation von einem Lesegerät zum benachbarten jeweils senkrecht zueinander eingestellt. Gleichzeitig wird die Polarisation der RFID-Etiketten beim Transport entlang der Lesegeräte wechselweise auf die jeweils gleiche Polarisationsebene der Lesegeräte umgeschaltet, in deren Lesebereich sie sich befinden.

Aus der EP 2 234 206 A1 ist eine Schleifenantenneneinheit bekannt, bei der ein erstes Speisekabel mit einem ersten Speiseanschluss der Antennenschleife und ein zweites Speisekabel mit einem zweiten Speiseanschluss der Antennenschleife verbindbar ist. Über Schalter werden die Speisekabel von nicht benutzten Speiseanschlüssen der Antennenschleife getrennt. Die Schalter werden über eine Gleichspannung gesteuert, die über jeweils das gleiche Speisekabel zugeführt wird. Am Anfang und Ende der Speisekabel ist jeweils eine Weiche angeordnet, die die Hochfrequenzenergie von der Steuerenergie trennt.

Der Erfindung liegt die Aufgabe zugrunde, bei einem RFID-Lesegerät, bestehend aus einer Leseeinheit und einer mit der Leseeinheit gekoppelten Antennenanordnung, eine Umschaltung zwischen unterschiedlichen Polarisationsebenen zu vereinfachen.

Diese Aufgabe wird bei einem RFID-Lesegerät nach dem Oberbegriff des Anspruchs 1 durch die Merkmale dieses Anspruchs gelöst.

Weiterbildungen und vorteilhafte Ausgestaltungen ergeben sich aus den Unteransprüchen.

Bei der Erfindung umfasst die Antennenanordnung einen von der Leseeinheit über die Speiseleitung fernsteuerbaren Umschalter, mittels dem die Speiseleitung mit einem der auswählbaren Ports verbindbar ist. Dem Umschalter oder weiteren elektronischen Komponenten der Antennenanordnung wird eine Betriebsspannung über dieselbe Speiseleitung zugeführt. Auch Schaltbefehle als Spannungsänderungen der Betriebsspannung werden von der Leseeinheit zum Umschalter oder anderen steuerbaren Komponenten über dieselbe Speiseleitung übertragen.

Hierdurch wird die Installation vereinfacht, da nur eine einzige Speiseleitung zwischen der Leseeinheit und der Antennenanordnung verlegt werden muss. Verwechslungen der Adern mehradriger Leitungen sind daher ausgeschlossen. Durch die Nutzung von Spannungsänderungen der Betriebsspannung als Schaltbefehle entfallen im Vergleich zu an sich bekannten Trägerfrequenzsystem zur Fernsteuerung Transceiver mit Frequenzweichen in der Leseeinheit und der Antennenanordnung.

Von als Sensoren ausgebildeten elektronischen Komponenten der Antennenanordnung werden Sensorsignale zur Leseeinheit durch Stromänderungen über dieselbe Speiseleitung übertragen werden.

Dadurch, dass eine andere physikalische Größe (Strom statt Spannung) zur Übertragung von Sensorsignalen zur Leseeinheit als Schalt- oder Steuersignale von der Leseeinheit zu Komponenten der Antennenanordnung genutzt wird, lassen sich die beiden Übertragungsrichtungen voneinander entkoppeln. Auch Duplexbetrieb ist möglich.

Einer der Sensoren ist ein Leistungsmesser, mit dem die Sendeleistung direkt an dem wenigstens einen Strahlerelement gemessen und als Sensorsignal zur Leseeinheit übertragen wird. Dort kann er einem Sendeleistungsregler der Leseeinheit zugeführt werden. Der Messwert der Sendeleistung kann vom Sendeleistungsregler als Regelabweichung für eine Regelung der Sendeleistung ausgewertet werden.

Mit dem Leistungsmesser kann die in das Strahlerelement eingespeiste Sendeleistung gemessen werden. Wegen der Leitungsdämpfung und der Dämpfung durch Anpassnetzwerke ist die Leistung am Strahlerelement stets kleiner als die von der Leseeinheit in die Speiseleitung eingespeiste Leistung. Durch die Auswertung des vom Leistungsmesser gelieferten Wertes kann mittels des Reglers die von der Leseeinheit erzeugte Sendeleistung so weit erhöht werden, dass nach Dämpfung durch die Speiseleitung und das Anpassnetzwerk genau die maximal zulässige Sendeleistung am Strahlerelement zur Verfügung steht.

Gemäß einer Weiterbildung können wenigstens zwei Strahlerelemente oder Antennenanordnungen räumlich getrennt angeordnet und gleichzeitig gespeist werden. Dabei wird über ein schaltbares, unterschiedliche Verzögerungsleitungen umfassendes Anpassnetzwerk als Komponenten der Antennenanordnungen wenigstens zwei unterschiedliche Hauptstrahlrichtungen der Strahlerelemente eingestellt werden.

Durch die Möglichkeit, zusätzlich zur Änderung der Polarisationsebenen auch die Hauptstrahlrichtung, nämlich die Maximalwerte der Stahlungskeulen der Strahlerelemente zu verändern, wird die Erfass- und Lesbarkeit von RFID-Datenträgern im Lesefeld weiter verbessert.

Mehrere Strahlerelemente oder Antennenanordnungen können über einen gemeinsamen Antennenmultiplexer mit der Leseeinheit gekoppelt werden.

Ein Antennenmultiplexer ermöglicht es, mehrere Antennenanordnungen oder Strahlerelemente abwechselnd über dieselbe Speiseleitung und denselben Port der Leseeinheit zu betreiben. Die mehreren Antennenanordnungen oder Strahlerelemente können räumlich verteilt um das Lesefeld angeordnet werden, um das Lesefeld aus mehreren Richtungen ausleuchten zu können oder sie können so angeordnet werden, dass das Lesefeld insgesamt vergrößert wird. Hierdurch wird die Erfass- und Lesbarkeit von RFID-Datenträgern im Lesefeld nochmals verbessert. Dies gilt besonders, wenn Polarisationsänderungen, Richtungsänderungen, und Standortänderungen in ihren möglichen Varianten untereinander kombiniert werden.

Zwischen der Leseeinheit und den Antennenanordnungen können über den gemeinsamen Antennenmultiplexer RFID-Energie-, Lese- und Schreibsignale, eine Betriebsspannung zur Versorgung der elektronischen Komponenten der Antennenanordnung, Steuer- und Schaltsignale von der Leseeinheit zu den elektronischen Komponenten der Antennenanordnung und Sensorsignale von Sensoren zur Leseeinheit weitergeleitet werden.

Durch diese Ausgestaltung und Eigenschaft der Antennenmultiplexer kann das Prinzip, sämtliche Daten, Befehle und die Betriebsspannung über dieselbe Speiseleitung zwischen der Leseeinheit und mehreren Antennenanordnungen oder Strahlerelementen zu übertragen, konsequent verwirklicht werden.

Bei einer bevorzugten Ausführung ist eine der Antennenanordnungen in einem gemeinsamen Gehäuse mit der Leseeinheit angeordnet.

Hierdurch vereinfacht sich der Aufbau der Leseeinheit, da externe Ports nur für externe Antennen vorgesehen werden müssen.

Nachfolgend wird die Erfindung anhand einer Zeichnung erläutert. Darin zeigen:
- Fig. 1: eine schematische Darstellung eines Lesegerätes aus einer Leseeinheit einer Antennenanordnung und einer Speiseleitung,
- Fig. 2: eine Darstellung einer Antennenanordnung mit mehreren Strahlerelementen,
- Fig. 3: eine Darstellung mehrerer über Antennenmultiplexer betriebene Antennenanordnungen und
- Fig. 4a,b: Querschnitte durch eine Leseeinheit mit integrierter Antennenanordnung und durch eine abgesetzte Antennenanordnung.
- Fig. 5: ein Schaltungsbeispiel für die Transceiver 24, 38, die Spannungsquelle 22 und den Spannungsaddierer 36 aus Fig. 1

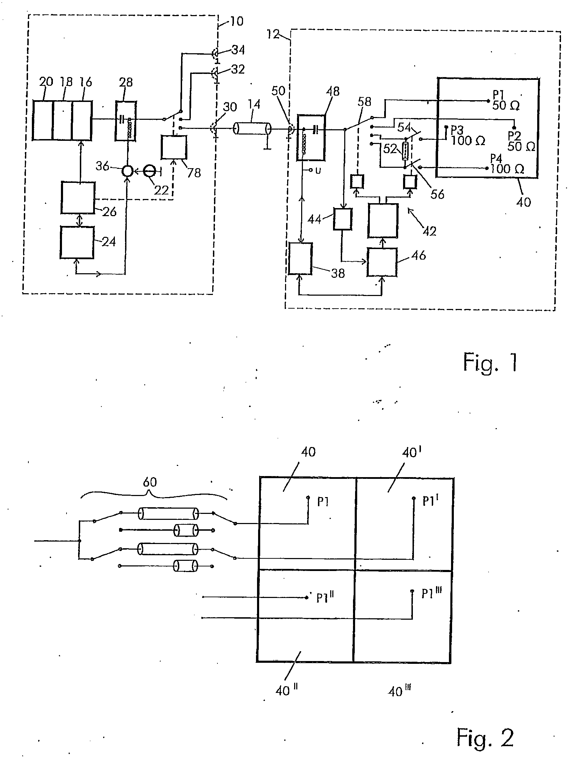

Fig. 1 zeigt eine schematische Darstellung eines Lesegerätes aus einer Leseeinheit 10, einer Antennenanordnung 12 und einer Speiseleitung 14. Die Leseeinheit 10 umfasst einen Transceiver 16 für die RFID-Frequenz mit Codierer/Decodierer 18 und Speicher 20 für RFID Signale, eine Betriebsspannungsfernspeisung 22 für Komponenten der Antennenanordnung 12, einen Transceiver 24 zum Senden von Schalt- und Steuersignalen zu Komponenten der Antennenanordnung 12 und Empfangen von Sensorsignalen von Sensoren der Antennenanordnung 12, einen Spannungsaddierer 36 zur additiven Verknüpfung der Spannungen der Betriebsspannungsfernspeisung 22 und des Transceivers 24, eine Steuerschaltung 26, eine Frequenzweiche 28 und wenigstens einen Port 30 zum Anschluss einer Speiseleitung 14, über die die Leseeinheit 10 mit der Antennenanordnung 12 gekoppelt ist. Der leseeinheitseitige Port 30 und die Speiseleitung 14 haben üblicher Weise eine Impedanz von 50 Ohm. Weitere Ports 32, 34 für weitere Speiseleitungen und Antennenanordnungen können vorgesehen werden und über einen internen, von der Steuerschaltung 26 geschalteten Antennenmultiplexer 78 eingeschaltet werden.

Die Antennenanordnung 12 umfasst ein Strahlerelement 40 mit mehreren Ports P1, P2, P3, P4, eine ferngesteuerte Schalteranordnung 42 als eine erste Komponente, einen Sensor in Form eines Leistungsmessers 44 als zweite Komponente, einen Transceiver 46 zum Empfang von Schalt- und Steuersignalen von der Leseeinheit 10 und Senden von Sensorsignalen zur Leseeinheit 10 als dritte Komponente, eine Steuerschaltung 38 als vierte Komponente, eine Frequenzweiche 48 und einen Anschluss 50 für das Speisekabel 14. Mittels der Steuerschaltung 38 werden die vom Transceiver 46 empfangenen Signale decodiert, die Schalteranordnung 42 gesteuert und Sensorsignale codiert.

Das Strahlerelement 40 ist ein Patch einer Patchantenne mit mehreren Einspeisepunkten, die als Ports herausgeführt sind. Zwei Ports P1 und P2 haben jeweils eine Impedanz von 50 Ohm und zwei weitere Ports P3 und P4 haben jeweils eine Impedanz von 100 Ohm. Die Ports P1 und P3 sind jeweils einer horizontalen und die Ports P2 und P4 einer vertikalen Polarisationsebene zugeordnet. Über einen Umschalter 58 kann ein gemeinsamer Anschluss 50 der Speiseleitung 14 über die Frequenzweiche 48 auf einen der vier Ports P1, P2, P3, P4 gelegt werden.

Weiter ist noch eine Umwegleitung 52 der Länge Lambda Viertel zwischen die Ports P3 und P4 mittels zweier Schalter 54, 56 schaltbar, wenn einer der Ports P3 oder P4 über die Frequenzweiche 48 mit dem Anschluss 50 der Speiseleitung 14 verbunden wird. Die Umwegleitung 52 bewirkt, dass RFID-Signale gleichzeitig, aber phasenverschoben in die Einspeisepunkte des Strahlerelements 40 eingespeist werden. Dies führt zu einer zirkularen Polarisation des Strahlerelements 40. Zwischen rechtsdrehender und linksdrehender zirkularer Polarisation kann gewählt werden, indem entweder der Port P3 oder der Port P4 über die Frequenzweiche 48 mit dem Anschluss 50 der Speiseleitung 14 verbunden wird.

Durch die Parallelschaltung der Ports P3 und P4 werden aus den einzelnen Impedanzen von 100 Ohm wieder resultierend 50 Ohm, so dass die Speiseleitung 14 mit der Impedanz von 50 Ohm reflexionsfrei angeschlossen werden kann. Die Ports P1 und P2 für stationäre horizontale und vertikale Polarisationsebenen werden nur einzeln verbunden und haben bereits eine von 50 Ohm, so dass deren Anschluss an die Speiseleitung 14 ebenfalls reflexionsfrei ist.

Eine Versorgung der Schalteranordnung 42, des Leistungsmessers 44 des Transceivers 38 und anderer Komponenten der Anordnung mit Betriebsspannung erfolgt vom Lesegerät 10 aus mittels der Betriebsspannungsfernspeisung 22 über die Frequenzweiche 28, die Speiseleitung 14 und die Frequenzweiche 48 zu einem Anschluss U, an den hier nicht dargestellte Kontakte der Komponenten angeschlossen werden können. Schaltbefehle werden in der leseeinheitseitigen Steuerschaltung 26 erzeugt und über den Transceiver 24, die Frequenzweiche 28, die Speiseleitung 14, und den Transceiver 48 zur Schalteranordnung 42 übermittelt, von wo die Umschaltung der Schalter 54, 56, 58 gesteuert wird.

Sensorsignale, im Ausführungsbeispiel ein Wert der Sendeleistung am Einspeisepunkt des Strahlerelements 40, werden vom Leistungsmesser 44 erfasst und über den Transceiver 38, die Frequenzweiche 48, die Speiseleitung14, die Frequenzweiche 28 und den Transceiver 24 zur Steuerschaltung 26 übermittelt. Mittels eines Reglers der Steuerschaltung 26 wird die Sendeleistung des RFID-Transceivers 16 dann so geregelt, dass am Einspeisepunkt des Strahlerelements 40 die maximal zulässige Sendeleistung oder ein einstellbarer kleinerer Wert exakt anliegt.

Fig. 2 zeigt eine Darstellung einer Antennenanordnung mit mehreren Strahlerelementen. Hier sind insgesamt vier Patches 40, 40', 40", 40"' einer Patchantenne so angeordnet, dass sich jeweils zwei horizontal nebeneinander und zwei vertikal übereinander befinden. Bei gleichzeitiger phasengleicher Speisung von zwei oder vier Patches 40, 40' wird die resultierende Strahlungskeule im Strahlungsdiagramm schmaler und der Gewinn größer. Es wird so die Richtwirkung ausgeprägter und der Antennengewinn in der Hauptstrahlrichtung, nämlich in Richtung des Maximums der resultierenden Strahlungskeule erhöht. Durch phasenverschobene Speisung der einzelnen Patches 40, 40', z. B. über eine schaltbare Umwegleitung 60 von weniger als Lambda Viertel, kann die Hauptstrahlrichtung geschwenkt werden.

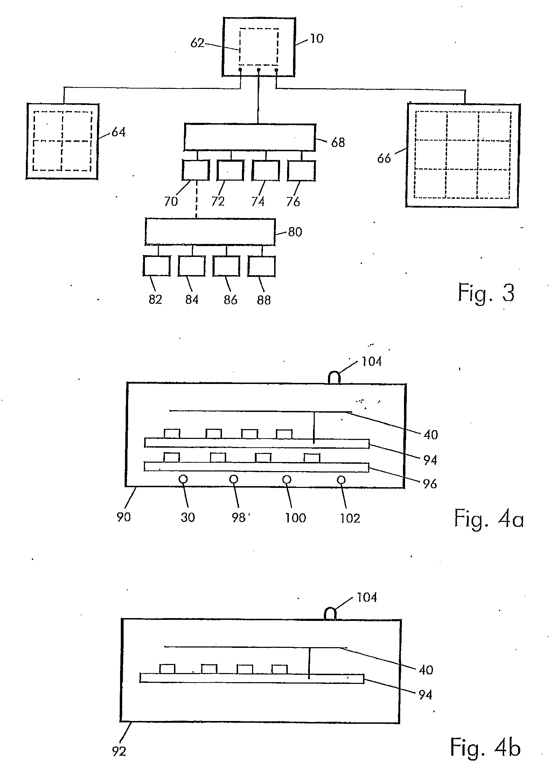

Fig. 3 zeigt eine Darstellung mehrerer Antennenanordnungen, die zusätzlich zu einer im Gehäuse der Leseeinheit 10 integrierten Antennenanordnung 62 und zwei direkt angeschlossenen Antennenanordnungen 64, 66 über Antennenmultiplexer 68, 80 an die Leseeinheit 10 angeschlossen sind. An einen ersten Port ist eine Antennenanordnung 64 mit vier Patches angeschlossen. An einen zweiten Port ist ein Antennenmultiplexer 68 angeschlossen, der seinerseits vier Antennenanordnungen 70, 72, 74, 76 versorgt. An einen dritten Port ist eine große Antennenanordnung 66 mit einer Vielzahl von Patches direkt angeschlossen. An Stelle einer Antennenanordnung 70 kann an den Antennenmultiplexer 68 auch ein weiterer Antennenmultiplexer 80 angeschlossen werden, über den vier weitere Antennenanordnungen 82, 84, 86, 88 versorgt werden. Die Kopplung zwischen der Leseeinheit 10 und dem Antennenmultiplexer 68 sowie zwischen dem jeweiligen Antennenmultiplexer 68; 80 und den Antennenanordnungen 70, 72, 74, 76; 82, 84, 86, 88 und den Antennenmultiplexern 68, 80 untereinander erfolgt stets über jeweils nur eine Speiseleitung. RFID-Energie-, Lese- und Schreibsignale, eine Betriebsspannung zur Versorgung der elektronischen Komponenten der Antennenanordnung, Steuer- und Schaltsignale von der Leseeinheit 10 zu den elektronischen Komponenten der Antennenanordnung und Sensorsignale von Sensoren zur Leseeinheit werden alle einheitlich über die Antennenmultiplexer 68, 80 und die Speiseleitungen weitergeleitet.

Die Figuren 4a und 4b zeigen Querschnitte durch eine Leseeinheit mit in die Leseeinheit integrierter Antennenanordnung und durch eine abgesetzte Antennenanordnung.

In Fig. 4a befinden sich in einem gemeinsamen Gehäuse 90 eine Leseeinheit und eine Antennenanordnung. Die Leseeinheit und elektronische Komponenten der Antennenanordnung befinden sich auf einer oder mehreren Platinen 94, 96, die im Abstand und parallel zum Strahlerelement 40 angeordnet sind. Speisepunkte des Strahlerelements 40 münden auf einer der Antennenanordnung zugeordneten Platine 94. Weiter sind noch vier Ports 30, 98, 100, 102 für externe Antennenanordnungen dargestellt und ein optischer Signalgeber 104 auf der einem Nutzer zugewandten Seite des Gehäuses 90.

In Fig. 4b befindet sich nur eine Antennenanordnung im Gehäuse 92. Die elektronischen Komponenten der Antennenanordnung befinden sich auf einer oder mehreren Platinen 94, die im Abstand und parallel zum Strahlerelement 40 angeordnet sind. Speisepunkte des Strahlerelements 40 münden auf einer benachbarten Platine 94.

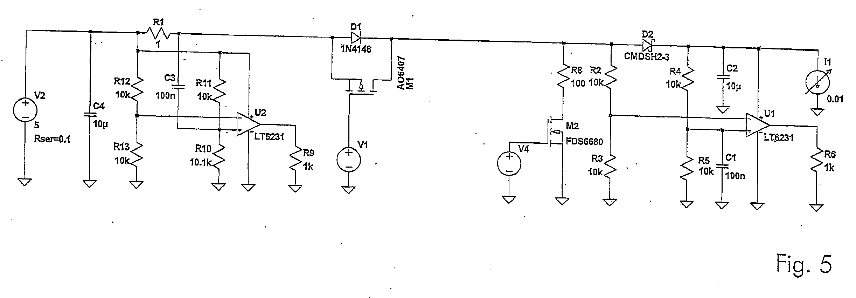

Fig. 5 zeigt ein Schaltungsbeispiel für die Transceiver 24, 38, die Betriebsspannungsfernspeisung 22 und den Spannungsaddierer 36 aus Fig. 1, jedoch ohne die Frequenzweichen 28, 48 und die Speiseleitung. Stattdessen sind die jeweiligen Komponenten der Leseeinheit und der Antennenanordnung direkt verbunden. Die Betriebsspannungsfernspeisung umfasst eine Spannungsquelle V2 mit einem Spannungseinbrüche ausgleichenden Parallelkondensator C4 und ist über einen Widerstand R1 und eine Parallelschaltung aus einer Diode D1 und einem Feldeffekttrahsistor M1 mit Komponenten der Antennenanordnung verbunden, um für diese Komponenten die Betriebsspannung zu liefern.

Der Transceiver 24 auf Seiten der Leseeinheit umfasst einen Sender zum Senden von Steuer- und Schaltsignalen an Komponenten der Antennenanordnung mittels Spannungsänderungen und ferner einen Empfänger zum Empfang von Sensorsignalen der Antennenanordnung mittels Stromänderungen. Der Sender besteht aus einer variablen Spannungsquelle V1 und dem Feldeffekttransistor M1, der wechselweise in einen leitenden oder nichtleitenden Zustand geschaltet werden kann. Im leitenden Zustand ist die Diode D1 überbrückt, im nichtleitenden Zustand wird die Durchlassspannung der Diode D1 von typisch 0,7 Volt als Spannungsabfall mit negativem Vorzeichen zur Spannung der Spannungsquelle U2 addiert. Die Diode D1 und der Feldeffekttransistor M1 bilden somit gleichzeitig den Spannungsaddierer 36 aus Fig. 1.

Der Empfänger besteht aus dem Widerstand R1, dem Operationsverstärker U2 mit seinen Vorspannungswiderständen und dem Ausgangswiderstand R9. Sensorsignale der Antennenanordnung in Form von Stromänderungen erzeugen am Widerstand R1 eine Spannungsdifferenz, die vom Operationsverstärker U2 verstärkt wird und am Widerstand R9 zur weiteren Verarbeitung abgreifbar ist.

Auf Seiten der Antennenanordnung sind elektrische Verbraucher allgemein als Stromsenke 11 an die Spannungsversorgung angeschlossen. Eine Diode D2 in Verbindung mit einem Kondensator C2 sorgt für eine Entkopplung vom Transceiver 38 und für eine Spannungsstabilisierung bei der Versorgung der elektrischen Verbraucher.

Der Transceiver 38 umfasst einen Sender zur Übertragung von Sensorsignalen als Stromänderungen an die Leseeinheit und einen Empfänger zum Empfang von Steuer- und Schaltsignalen der Leseeinheit, die als Spannungsänderungen übertragen werden.

Der Sender besteht aus der Serienschaltung eines Widerstandes R8 und eines Feldeffekttransistors M2, die ihrerseits einen Nebenschluss zu den allgemeinen elektrischen Verbrauchern I1 bilden, sowie aus einer den Feldeffekttransistor M2 steuernden Spannungsquelle V4. Durch wechselweises Schalten des Feldeffekttransistors M2 in den leitenden und den nichtleitenden Zustand fließt im leitenden Zustand zusätzlich zum Strom, der von den allgemeinen Verbrauchern I1 benötigt wird, weiterer Strom durch den Widerstand R8. Die Stromänderungen werden zur Leseeinheit übertragen.

Der Empfänger umfasst einen Operationsverstärker U1 mit einem Ausgangswiderstand R6, wobei ein erster Eingang des Operationsverstärkers U2 über einen Spannungsteiler an die stabilisierte Versorgungsspannung hinter der Diode D2 angeschlossen ist und ein zweiter Eingang des Operationsverstärkers U2 ebenfalls über einen Spannungsteiler an die mit Spannungsänderungen beaufschlagte Leitung vor der Diode D2 angeschlossen ist. Spannungsdifferenzen zwischen den Eingängen werden verstärkt und sind zur weiteren Verarbeitung am Widerstand R6 abgreifbar.

**Bezugszeichenliste:**

| | | | |
|---|---|---|---|
| 10 | Leseeinheit | 58 | Umschalter |
| 12 | Antennenanordnung | 60 | Umwegleitung |
| 14 | Speiseleitung | 62 | Antennenanordnung |
| 16 | Transceiver | 64 | Antennenanordnung |
| 18 | Codierer/Decodierer | 66 | Antennenanordnung |
| 20 | Speicher | 68 | Antennenmultipl. |
| 22 | Betriebsspannungs- | 70 | Antennenanordnung |
| | Fernspeisung | 72 | Antennenanordnung |
| 24 | Transceiver | 74 | Antennenanordnung |
| 26 | Steuerschaltung | 76 | Antennenanordnung |
| 28 | Frequenzweiche | 78 | Antennenmultipl. |
| 30 | Port | 80 | Antennenmultipl |
| 32 | Port | 82 | Antennenanordnung |
| 34 | Port | 84 | Antennenanordnung |
| 36 | Spannungsaddierer | 86 | Antennenanordnung |
| 38 | Steuerschaltung | 88 | Antennenanordnung |
| 40 | Strahlerelement/Patch | 90 | Gehäuse |
| 42 | Schalteranordnung | 92 | Gehäuse |
| 44 | Leistungsmesser | 94 | Platine |
| 46 | Transceiver | 96 | Platine |
| 48 | Frequenzweiche | 98 | Port |
| 50 | Anschluss | 100 | Port |
| 52 | Umwegleitung | 102 | Port |
| 54 | Schalter | 104 | opt. Signalgeber |
| 56 | Schalter | | |

## Patentansprüche

1. RFID-Lesegerät bestehend aus einer Leseeinheit (10) und einer mit der Leseeinheit (10) gekoppelten Antennenanordnung (12), deren wenigstens eines Strahlerelement (40) zwischen wenigsten zwei orthogonal zueinander weisenden Polarisationsebenen umschaltbar ist, wobei jeder Polarisationsebene wenigstens ein gesonderter Port (P1) zugeordnet ist, über den die Leseeinheit (10) bei umschaltbarer Auswahl einer der verfügbaren Polarisationsebenen mit dem wenigstens einen Strahlerelement (40) verbunden ist und die übrigen jeweils nicht mit der Leseeinheit (10) verbundenen Ports offen, nämlich nicht mit Abschlusswiderständen abgeschlossen sind, **dadurch gekennzeichnet, dass** die Antennenanordnung einen von der Leseeinheit (10) über die Speiseleitung (14) fernsteuerbaren Umschalter (58) umfasst, mittels dem die Speiseleitung (14) mit einem der auswählbaren Ports verbindbar ist, dass dem Umschalter (58) oder weiteren elektronischen Komponenten der Antennenanordnung (12) eine Betriebsspannung über dieselbe Speiseleitung (14) zugeführt ist und Schaltbefehle als Spannungsänderungen der Betriebsspannung von der Leseeinheit (10) zum Umschalter (58) oder steuerbaren Komponenten (54, 56) ebenfalls über dieselbe Speiseleitung (14) übertragbar sind, dass von als Sensoren ausgebildeten elektronischen Komponenten der Antennenanordnung (12) Sensorsignale zur Leseeinheit 10) durch Stromänderungen über dieselbe Speiseleitung (14) übertragbar sind, wobei einer der Sensoren ein Leistungsmesser (44) ist, mit dem die Sendeleistung direkt an dem wenigstens einen Strahlerelement (40) messbar und als Sensorsignal zu einem Sendeleistungsregler der Leseeinheit (10) übertragbar und vom Sendeleistungsregler als Regelabweichung für eine Regelung der Sendeleistung auswertbar ist.

2. RFID-Lesegerät nach Anspruch 1, **dadurch gekennzeichnet, dass** wenigstens zwei Strahlerelemente (40, 40', 40", 40"') oder Antennenanordnungen (12) räumlich getrennt angeordnet und gleichzeitig gespeist sind, wobei über ein schaltbares, unterschiedliche Verzögerungsleitungen (60) umfassendes Anpassnetzwerk als Komponenten der Antennenanordnungen (12) wenigstens zwei unterschiedliche Hauptstrahlrichtungen der Strahlerelemente (40, 40', 40", 40"') elnstellbar sind.

3. RFID-Lesegerät nach Anspruch 1 oder 2, **dadurch gekennzeichnet, dass** mehrere Strahlerelemente oder Antennenanordnungen (62, 64, 66; 70, 72, 74, 76; 82, 84, 86, 88) über einen gemeinsamen Antennenmultiplexer (68, 78, 80) mit der Leseeinheit (10) koppelbar sind.

4. RFID-Lesegerät nach Anspruch 3, **dadurch gekennzeichnet, dass** zwischen der Leseeinheit (10) und den Antennenanordnungen (62, 64, 66; 70, 72, 74, 76; 82, 84, 86, 88) über den gemeinsamen Antennenmultiplexer (68, 78, 80) RFID-Energie-, Lese- und Schreibsignale, eine Betriebsspannung zur Versorgung der elektronischen Komponenten (38, 42, 46, 54, 56, 58) der Antennenanordnungen (62, 64, 66; 70, 72, 74, 76; 82, 84, 86, 88), Steuer- und Schaltsignale von der Leseeinheit (10) zu den elektronischen Komponenten (38, 42) der Antennenanordnungen (62, 64, 66; 70, 72, 74, 76; 82, 84, 86, 88) und Sensorsignale von Sensoren zur Leseeinheit (10) weiterleitbar sind.

5. RFID-Lesegerät nach Anspruch 3 oder 4, **dadurch gekennzeichnet, dass** eine der Antennenanordnungen (62) in einem gemeinsamen Gehäuse (90, 92) mit der Leseeinheit (10) angeordnet ist.

## Claims

1. An RFID reading device consisting of a reading unit (10) and an antenna arrangement (12) which is coupled to the reading unit (10) and of which at least one emitter element (40) is switchable between at least two polarisation planes pointing orthogonally relative to one another, each polarisation plane being assigned at least one separate port (P1) via which, if one of the available polarisation planes is switchably selected, the reading unit (10) is connected to the at least one emitter element (40) and the other ports which are respectively not connected to the reading unit (10) are open, i.e. not terminated by the terminating resistors,
**characterised in that** the antenna arrangement comprises a switch (58) which can be remotely controlled by the reading unit (10) via the feed line (14) and by means of which the feed line (14) can be connected to one of the selectable ports, **in that** an operating voltage is supplied via the same feed line (14) to the switch (58) or additional electronic components of the antenna arrangement (12) and switching commands can be transmitted, also via the same feed line (14), as voltage changes in the operating voltage, from the reading unit (10) to the switch (58) or controllable components (54, 56), **in that** sensor signals can be transmitted to the reading unit (10) through changes in current via the same feed line (14) from electronic components of the antenna arrangement (12) which are configured as sensors, wherein one of the sensors is a power meter (44) with which the transmission power can be measured directly at the at least one emitter element (40) and can be transmitted as a sensor signal to a transmission power controller of the reading unit (10) and evaluated by the transmission power controller as a control deviation for controlling the transmission power.

2. The RFID reading device according to Claim 1, **characterised in that** at least two emitter elements (40, 40', 40", 40"') or antenna arrangements (12) are arranged to be spatially separated and fed simultaneously, wherein at least two different main emission directions of the emitter elements (40, 40', 40", 40"') can be set, via a switchable matching network comprising different delay lines (60), as components of the antenna arrangements (12).

3. The RFID reading device according to Claim 1 or 2, **characterised in that** several emitter elements or antenna arrangements (62, 64, 66; 70, 72, 74, 76; 82, 84, 86, 88) are able to be coupled to the reading unit (10) via a common antenna multiplexer (68, 78, 80).

4. The RFID reading device according to Claim 3, **characterised in that** RFID energy, reading and writing signals, an operating voltage for supplying the electronic components (38, 42, 46, 54, 56, 58) of the antenna arrangements (62, 64, 66; 70, 72, 74, 76; 82, 84, 86, 88), control and switching signals from the reading unit (10) to the electronic components (38, 42) of the antenna arrangements (62, 64, 66; 70, 72, 74, 76; 82, 84, 86, 88) and sensor signals from sensors to the reading unit (10) can be conducted between the reading unit (10) and the antenna arrangements (62, 64, 66; 70, 72, 74, 76; 82, 84, 86, 88), via the common antenna multiplexers (68, 78, 80).

5. The RFID reading device according to Claim 3 or 4, **characterised in that** one of the antenna arrangements (62) is arranged in a common housing (90, 92) with the reading unit (10).

## Revendications

1. Lecteur RFID composé d'une unité de lecture (10) et d'un système d'antenne (12), dont au moins un élément rayonnant (40), placé entre au moins deux niveaux de polarisation perpendiculaires entre eux, peut être inversé, raccordé à l'unité de lecture (10), au moins un port spécifique (P1) étant attribué à chaque niveau de polarisation et grâce auquel l'unité de lecture (10) est reliée à au moins l'un des éléments rayonnants (40) en cas de choix réversible d'un des niveaux de polarisation disponibles et les autres ports non reliés à l'unité de lecture (10) sont libres, c'est-à-dire non séparés par des résistances terminales, **caractérisé en ce que** le système d'antenne comprend un inverseur (58) qui se commande à distance à partir de l'unité de lecture (10) par l'intermédiaire du fil d'alimentation (14) et qui permet de relier le du fil d'alimentation (14) à l'un des ports disponibles, **en ce que** l'inverseur (58) ou d'autres composants électroniques du système d'antenne (12) sont alimentés en tension de service par le même fil d'alimentation (14) et **en ce que** les ordres de commutation sont également transmissibles par l'unité de lecture (10) à l'inverseur (58) ou aux composants (54, 56) sous contrôle par l'intermédiaire de ce même fil d'alimentation (14) sous forme de variations de la tension de service, **en ce que** des signaux de capteurs sont transmissibles à l'unité de lecture (10) par des composants électroniques du système d'antenne (12), conformés en capteurs, par l'intermédiaire de ce même fil d'alimentation (14) par des variations de courant, l'un des capteurs étant un wattmètre (44) avec lequel il est possible de mesurer la puissance d'émission directement sur l'(ou les)élément(s) rayonnant(s) (40), de la transmettre à un régulateur de la puissance d'émission de l'unité de lecture (10) et de l'analyser avec le régulateur de la puissance d'émission afin de réguler la puissance d'émission.

2. Lecteur RFID selon la revendication 1, **caractérisé en ce qu'**au moins deux éléments rayonnants (40, 40', 40", 40"') ou systèmes d'antenne (12) sont disposés séparément, et alimentés simultanément, au moins deux directions différentes des faisceaux principaux des éléments rayonnants (40, 40', 40", 40"') en tant que composants des systèmes d'antenne (12) étant réglables par l'intermédiaire d'un réseau d'adaptation commutable comprenant différentes lignes à retard(60).

3. Lecteur RFID selon la revendication 1 ou 2, **caractérisé en ce que** plusieurs éléments rayonnants ou systèmes d'antenne (62, 64, 66 ; 70, 72, 74, 76 ; 82, 84, 86, 88) peuvent être couplés à l'unité de lecture (10) par un multiplexeur d'antenne (68, 78, 80) commun.

4. Lecteur RFID selon la revendication 3, **caractérisé en ce qu'**entre l'unité de lecture (10) et les systèmes d'antenne (62, 64, 66 ; 70, 72, 74, 76 ; 82, 84, 86, 88) il est possible de transmettre des signaux RFID concernant l'énergie, la lecture ou l'écriture, une tension de service pour alimenter les composants électroniques (28, 42, 46, 54, 56, 58) des systèmes d'antenne (62, 64, 66; 70, 72, 74, 76; 82, 84, 86, 88), des signaux de commande ou de commutation entre l'unité de lecture (10) aux composants électroniques (38, 42) des systèmes d'antenne (62, 64, 66 ; 70, 72, 74, 76 ; 82, 84, 86, 88) et des signaux de capteurs entre les capteurs et l'unité de lecture (10) par l'intermédiaire du multiplexeur d'antenne (68, 78, 80).

5. Lecteur RFID selon la revendication 3 ou 4, **caractérisé en ce que** l'un des systèmes d'antenne (62) se trouve dans un boîtier (90, 92) commun avec l'unité de lecture (10).
